# EUROPÄISCHE PATENTANMELDUNG

(11) **EP 1 647 685 A2**
(43) Veröffentlichungstag der Anmeldung: **19.04.2006**
(21) Anmeldenummer: 05022180.3
(22) Anmeldetag: 12.10.2005
(51) Int. Cl.: F02D 19/08, F02D 41/00

(54) **Verfahren und Vorrichtung zur Verifikation eines vorgegebenen Kraftstoffmischungsverhältnisses**

(30) Priorität: 15.10.2004 DE 102004050602
(71) Anmelder: Kangler, Wolfram, Dipl.-Phys. Univ., 93149 Nittenau - Brunn (DE)
(72) Erfinder: Kangler, Wolfram, Dipl.-Phys. Univ., 93149 Nittenau - Brunn (DE)
(74) Vertreter: Glück, Martin

(57) **Zusammenfassung**

Einem Einspritzsystem (1) wird beim Betrieb einer Brennkraftmaschine (BKM) mit zumindest zwei separat bevorrateten Kraftstoffsorten (KS1, KS2)zumindest eine erste Kraftstoffsorte (KS1) zugeführt. Mit der Zuführung einer zweiten Kraftstoffsorte (KS2) oder mit dem Wechsel der Zuführung von der ersten Kraftstoffsorte (KS1) auf die zweite Kraftstoffsorte (KS2) wird das durch das Einspritzsystem (1) geförderte Kraftstoffvolumen (KVR) ermittelt und abhängig davon das Vorliegen eines vorgegeben Kraftstoffmischungsverhältnisses (KMV1 bis KMVx) verifiziert.

## Beschreibung

Die Erfindung betrifft ein Verfahren zur Verifikation zumindest eines vorgegebenen Kraftstoffmischungsverhältnisses in einem Einspritzsystem beim Betrieb einer Brennkraftmaschine mit zumindest zwei separat bevorrateten Kraftstoffsorten, bei dem dem Einspritzsystem zumindest eine erste Kraftstoffsorte zugeführt wird.

Pflanzenöle als biogene Treibstoffe weisen gegenüber fossilen Energieträgern ökologische und ökonomische Vorteile auf: Sie stammen aus nachwachsenden Rohstoffen, sind dadurch bei der Verbrennung weitgehend kohlendioxid-neutral, frei von Schwefel und im Gegensatz zu konventionellen Kraftstoffen biologisch gut abbaubar. Ferner ist der Partikelausstoß bei der Verbrennung gegenüber Diesel drastisch reduziert.

Aufgrund der gegenüber von Dieselkraftstoffen bzw. Biodiesel chemisch und physikalisch anderen Kraftstoffeigenschaften von Pflanzenölen werden zum Betrieb von handelsüblichen Kraftfahrzeugen mit Pflanzenöl entweder speziell entwickelte Pflanzenölmotoren bzw. modifizierte Seriendieselmotoren eingesetzt. Jedoch wirft eine derartige Verwendung von naturbelassenem Pflanzenöl als Kraftstoff insbesondere in modernen direkt einspritzenden Seriendieselmotoren erhebliche technische Schwierigkeiten auf.

Herkömmliche Einspritzsysteme nahezu sämtlicher handelsüblicher SerienDieselmotoren weisen beispielsweise eine Kraftstoffleitung bzw. Vorlaufleitung von einem Kraftstofftank, insbesondere Dieseltank zu einem Einspritzsystem und eine Rücklaufleitung vom Einspritzsystem zurück in den Kraftstofftank auf. Während des Betriebs beispielsweise eines Serien-Dieselmotors beträgt der Volumenstrom im Umlauf vom Kraftstofftank durch das Einspritzsystem und zurück in den Kraftstofftank im Mittel ein Vielfaches des tatsächlich pro Zeiteinheit vom Serien-Dieselmotor verbrauchten Kraftstoffanteils. Der derartig umlaufende Kraftstoff dient hierbei im Einspritzsystem zur Schmierung der mechanischen Teile und fördert darüber hinaus die Betriebswärme aus dem Einspritzsystem. In einer Vielzahl von Einspritzsystemen wird daher der rücklaufende Kraftstoff zusätzlich zum Beheizen beispielsweise eines Kraftstoff-Vorlauffilters benutzt.

Bei neuartigen Einspritzsystemen mit Radialkolbenpumpe und vor allem solchen mit "Common Rail"- oder "Pumpe-Düse"- oder "Pumpe-Leitung-Düse"-Verfahren hingegen dient der im Einspritzsystem umlaufende Kraftstoff insbesondere zur Kühlung. Durch mechanische Arbeit und die Anordnung der Kraftstoff führenden Komponenten ergibt sich prinzipbedingt im Betrieb eines derartigen Einspritzsystems eine thermische Leistung von mehreren Kilowatt, die mit Hilfe des Kraftstoffumlaufs kompensiert wird. Vor der Rückführung zum Kraftstofftank durchläuft der erwärmte Kraftstoff häufig einen Wärmetauscher bzw. Rücklaufkühler. Über einen derartigen Rücklaufkühler wird das Einspritzsystem thermisch stabil gehalten. Über die Rücklaufleitung werden darüber hinaus im Kraftstoff entstandene Gasblasen oder unbeabsichtigt eingedrungene Luft kontinuierlich aus dem Einspritzsystem entfernt.

Bei der Verwendung von Kraftstoffen, die bei erhöhten Kraftstofftemperaturen für die Einspritzung und Verbrennung im Motor günstigere Eigenschaften aufweisen hat sich die Zuführung des Rücklaufes - ganz oder teilweise - zum Vorlauf unter Umgehung des Kraftstofftanks bewährt (= kurzgeschlossener Rücklauf). Dieses Verfahren findet Anwendung zur Beeinflussung der Fließeigenschaften bei Kraftstoffen mit stark temperaturabhängiger Viskosität und kann darüber hinaus auch im Verlauf der Siedekurve, in der Zündtemperatur oder anderer chemischer und physikalischer Eigenschaften begründet sein. Aus der DE 197 36 283 ist eine Kraftstoffversorgung bekannt, bei der zum Schutze vor Überhitzung des Kraftstoffes in Abhängigkeit von dessen Viskosität eine Rückleitung zum Tank vorgesehen ist.

Ferner sind Verfahren zum Betrieb einer Brennkraftmaschine mit zwei separat bevorrateten Kraftstoffsorten, beispielsweise mit Dieselkraftstoff und Pflanzenöl bekannt, bei denen einem herkömmlichen Dieselmotor in Abhängigkeit von dessen Kühlwassertemperatur entweder Dieselkraftstoff oder erwärmtes Pflanzenöl zugeführt wird. Derartige Systeme sind in der Literatur unter der Bezeichnung 2-Tank-Systeme bekannt. Aus der DE 202 08 590 ist beispielsweise ein 2-Tank-System bekannt, bei dem die Erwärmung mittels eines kühlwasserbetriebenen Wärmetauschers und einer elektrischen Heizquelle erfolgt. Das Pflanzenöl wird hierbei vorzugsweise auf 70°C erwärmt. Aus der DE 38 00 585 ist ebenfalls eine temperaturabhängige Umschaltung der Kraftstoffzuführung zum Betrieb einer Brennkraftmaschine mit zwei separaten Kraftstoffsorten bekannt.

Die heute weit verbreiteten direkt einspritzenden Dieselmotoren stellen an die Betriebsbedingungen für eine vollständige Verbrennung des eingespritzten Kraftstoffes wesentlich höhere Anforderungen als dies bei Vor- bzw. Wirbelkammer-Dieselmotoren der Fall ist. Bei der Konstruktion neuer Dieselmotoren und zugehöriger Einspritzsysteme spielen außerdem die geltenden und kommenden Abgasnormen eine entscheidende Rolle. Aufgrund der aktuellen Abgasnormen ist es erforderlich, die Stickoxid- und Ruß-Emissionen von neu entwickelten Dieselmotoren so niedrig wie möglich zu halten.

Hierzu sind aus dem Stand der Technik Abgas-Rückführungssysteme bekannt, die derzeit in einer Vielzahl der auf dem Markt erhältlichen Dieselfahrzeuge eingebaut werden. Bei derartigen Abgas-Rückführungssystemen wird über die Beimischung von Abgas zur Ansaugluft für den Brennvorgang eine niedrigere Sauerstoffkonzentration bereitgestellt. Hierdurch werden lokale Spitzentemperaturen beim Brennvorgang vermieden, die die thermische Bildung von NO (= Zeldovich-NO) begünstigen. Im direkten Zielkonflikt zur Stickoxidvermeidung steht die Rußbildung, da bei einer niedrigen Sauerstoffkonzentration eine ausreichende Oxidation des Rußes ausbleibt.

Eine weitere Maßnahme zur Reduzierung der Stickoxid-Emissionen ist die gezielte dynamische Verstellung der Einspritzung (z.T. auch mehrere Einspritzungen pro Takt) bzw. des Förderbeginns nach "spät", also bei einer im zeitlichen Ablauf später erreichten Position des Kolbens vor oder auch nach dem oberen Totpunkt. Auch über den Einspritzdruck kann Einfluss auf das Abgasverhalten genommen werden. Ein niedrigerer Einspritzdruck führt zur Bildung größerer Tröpfchen, was letztlich wieder zu einem höherem Rußanteil führt.

Der technische Aufbau sowie die Regelung eines Einspritzsystems sind bei modernen direkt einspritzenden Dieselmotoren für die Verwendung von Diesel-Normkraftstoff optimiert. Abgasrückführung, Spätverstellung des Förderbeginns etc. werden beispielsweise durch eine elektronische Regelung während des Fahrbetriebes abhängig von den aktuellen Betriebsparametern und auf den Dieselbetrieb zugeschnittenen Vergleichswerten vorgenommen. Wird nun statt Dieselkraftstoff beispielsweise reines Pflanzenöl verwendet, können gerade diese Maßnahmen häufig Fehlfunktionen oder sogar gravierende Motorschäden erzeugen.

Aktuelle Untersuchungen an entsprechenden Umrüstsystemen für den Betrieb von Seriendieselmotoren mit Pflanzenöl haben gezeigt, dass gerade bei direkt einspritzenden Dieselmotoren, besonders Bei "Common Rail" aber auch "Pumpe-Düse"-Dieselmotoren regelmäßig schwerwiegende Probleme auftreten. Beispielsweise ist eine vollständige Verbrennung des Pflanzenöles unter gewissen Betriebsbedingungen, insbesondere bei Neustart eines nicht betriebswarmen Dieselmotors oder bei mäßiger Belastung des Dieselmotors häufig nicht mehr gegeben. Gerade im Bereich der Kraft- oder Nutzfahrzeuge sowie bei landwirtschaftlichen Fahrzeugen treten solch ungünstige Betriebsbedingungen unvermeidlich regelmäßig und häufig auf. Folgen einer derartigen unvollständigen Verbrennung sind beispielsweise Eintrag von unverbranntem Pflanzenöl in das Motoröl mit der Bildung von Verklumpungen durch Polymerisation. In der Konsequenz führt dies zum Ausfall des Schmiersystems. Ebenso führen Veränderungen an den Einspritzdüsen ("Verkokungen") zu einem unbrauchbaren Spritzbild, was gravierende Schäden an den Kolbenböden, den Kolbenringen, und an den Ventilen nach sich ziehen kann.

Ohne innermotorische Modifikationen, also nur durch Veränderungen in der Peripherie des Motors und in der Kraftstoffzuführung sind derartige direkt einspritzende Seriendieselmotoren nicht zuverlässig, langzeitstabil und komfortabel auch unter Berücksichtigung regelmäßig vorkommender ungünstiger Betriebsbedingungen auf den Betrieb mit reinem Pflanzenöl umrüstbar.

Sowohl für den Kaltstart als auch die Warmlaufphase eines derartigen Dieselmotors sowie während bestimmter Betriebszustände hat es sich als technisch sinnvoll und wünschenswert erwiesen, dem Einspritzsystem reinen Dieselkraftstoff, reines Pflanzenöl oder eine Mischung aus Pflanzenöl und Dieselkraftstoff zuzuführen. Schon ein geringer Prozentsatz Dieselkraftstoff in einer Mischung mit Pflanzenöl senkt die Viskosität des Diesel-Pflanzenöl-Gemisches gegenüber der von reinem Pflanzenöl erheblich und führt darüber hinaus meist zu einer deutlich besseren Verbrennung in der Brennkraftmaschine. Hierzu ist die Einstellung eines definierten Mischungsverhältnisses des im Einspritzsystem befindlichen Kraftstoffgemisches abhängig vom jeweiligen Betriebszustand des Dieselmotors erforderlich.

Beim Startvorgang eines Dieselmotors ist es insbesondere erforderlich, dass der eingespritzte Kraftstoff sofort zündfähig und vollständig verbrennbar ist. Insbesondere bei einem Kaltstart nach einer längeren Standzeit des Dieselmotors und einer damit verbundenen Abkühlung, sollte der im Einspritzsystem befindliche Kraftstoff ganz oder zumindest anteilig durch Dieselkraftstoff ersetzt werden. Dieser Vorgang wird als "Spülvorgang" bezeichnet und wird ebenso bevorzugt vor einer Betriebsunterbrechung bei noch laufendem Motor durchgeführt. Hierzu wird dem Dieselmotor für eine bestimmte Zeitdauer ausschließlich Diesel zugeführt, wodurch sich der Dieselanteil am Kraftstoffmischungsverhältnis im Einspritzsystem kontinuierlich erhöht. Aufgrund des Aufbaus der Einspritzsysteme handelt es sich beim Spülen im Wesentlichen um einen Verdünnungsvorgang und nur zu einem geringen Teil um eine Verdrängung. Der Anteil des Pflanzenöles an der gesamten Kraftstoffmenge innerhalb des Einspritzsystems während des Spülvorganges kann deshalb in guter Näherung anhand einer exponentiellen Zerfallskurve beschrieben werden, die für ein gegebenes Einspritzsystem ausschließlich von der zugeführten Dieselkraftstoffmenge abhängt.

Wird der Kraftstoff bzw. das Kraftstoffgemisch wie zuvor beschriebenen im kurzgeschlossenen Rücklauf geführt, entspricht die zugeführte Dieselkraftstoffmenge exakt der in die Brennräume eingespritzten Kraftstoffmenge. Durch Kenntnis des Verbrauches des Kraftfahrzeugs lässt sich die Dieselkonzentration anhand der zurückgelegten Wegstrecke oder der Zeitspanne nach Einleiten des Spülvorganges abschätzen. Typische Wegstrecken für einen "ausreichenden" Spülvorgang sind 5 - 10 km vor dem Abschalten des Motors.

Zum Zwecke des schnelleren Zuführens von Dieselkraftstoff kann der Spülvorgang auch derart durchgeführt werden, dass ein Rücklauf zu einem Tank gewährt wird. Dann wird die zufließende Dieselmenge neben dem Verbrauch, zusätzlich durch die in den Kraftstofftank rücklaufende Kraftstoffmenge bestimmt. Letzteres dominiert den Vorgang bei weitem.

Eine Messung von Zeit oder Wegstrecke nach Einleiten des Spülvorganges lässt unter ansonsten nicht gleich bleibenden Randbedingungen hier keine zuverlässige Aussage über das aktuelle Mischungsverhältnis des Kraftstoffgemisches im Einspritzsystem zu.

Der Volumenstrom in den Kraftstofftank entspricht dem vom Einspritzsystem gepumpten Volumen und hängt von einer Vielzahl von Parametern ab. Die genaue Kenntnis darüber entzieht sich dem direkten Zugang. Es lassen sich bestenfalls Durchschnittswerte über längere Zeitspannen abschätzen, wenn eine Mittelung über die Einfluss nehmenden Parameter stattgefunden hat. Typische Größenordnungen für den Volumenstrom während des Fahrbetriebes durch eine Verteilereinspritzpumpe liegen beispielsweise bei ca. 60 Litern pro Stunde. Somit lässt sich ein Spülvorgang unter geeigneten Umgebungsparametern in weniger als einer Minute abschließen.

Die exakte Kenntnis des prozentualen Mischungsverhältnisses der Kraftstoffsorten ist hierzu nicht immer erforderlich. Insbesondere soll aber für den Spülvorgang ein Zeitpunkt zuverlässig festgestellt werden können, zu dem sich während des Betriebes des Dieselmotors ein vorgegebenes Mischungsverhältnis eingestellt hat, nachdem beispielsweise von der Zuführung eines Kraftstoffes auf einen anderen gewechselt wurde. Darüber hinaus ist es erforderlich, ein wählbares Mischungsverhältnis der Kraftstoffsorten während des Betriebes einstellen zu können sowie das eingestellte Mischungsverhältnis automatisch konstant halten zu können, ohne eine Vermischung der Kraftstoffe in den Kraftstofftanks herbeizuführen.

Der vorliegenden Erfindung liegt somit die Aufgabe zugrunde, ein Verfahren zur Verifikation des Vorliegens zumindest eines vorgegeben Kraftstoffmischungsverhältnisses anzugeben, das während des Betriebes einer Brennkraftmaschine eine zuverlässige Verifikation eines vorgegebenen Kraftstoffmischungsverhältnis sowie das Einstellen und Beibehalten dieses Kraftstoffmischungsverhältnisses und die Bestimmung des Lastzustands einer Brennkraftmaschine ermöglicht.

Diese Aufgabe wird ausgehend von einem Verfahren gemäß dem Oberbegriff des Patentanspruches 1 durch dessen kennzeichnende Merkmale gelöst.

Der wesentliche Aspekt des erfindungsgemäßen Verfahrens besteht darin, dass mit der Zuführung einer zweiten Kraftstoffsorte oder mit dem Wechsel der Zuführung von der ersten Kraftstoffsorte auf die zweite Kraftstoffsorte das durch das Einspritzsystem geförderte Kraftstoffvolumen ermittelt wird und abhängig von dem ermittelten Kraftstoffvolumen das Vorliegen eines vorgegeben Kraftstoffmischungsverhältnisses verifiziert wird. Der Vorteil der Messung des geförderten Kraftstoffvolumens besteht darin, dass diese Messgröße unabhängig von den momentanen Betriebsparametern einen exakten Rückschluss auf das Mischungsverhältnis des Kraftstoffgemisches im Einspritzsystem zulässt. Damit wird ein unzureichender Spülenvorgang ebenso verhindert wie ein übermäßiger Durchsatz des für den Spülvorgang verwendeten Dieselkraftstoffes. Dieser steht nach dem Spülvorgang nicht mehr sortenrein zur Verfügung und kann deshalb nicht mehr als Spülkraftstoff eingesetzt werden.

Vorteilhaft können insbesondere beliebige Kraftstoffmischungsverhältnisse im Einspritzsystem eingestellt werden. Damit ist in allen Betriebszuständen beispielsweise eines Seriendieselmotors eine vollständige Verbrennung des Pflanzenöls (gemischt mit Diesel) erreichbar, zumal das Mischungsverhältnis bis zu 100% frei von Pflanzenöl einstellbar ist. Schäden, die durch die Verwendung von reinem Pflanzenöl in nicht dafür geeigneten Betriebszuständen entstehen, werden durch Verwendung eines derartigen Kraftstoffgemisches vermieden.

In einer bevorzugten Ausführung kann mittels einer Volumenstrommesseinrichtung in Zusammenspiel mit über eines Regeleinheit gesteuerten Magnetventilen ein vorgegebenes Kraftstoffmischungsverhältnis abhängig von dem durch das Einspritzsystem geförderten Kraftstoffvolumen laufend verifiziert und aufrechterhalten werden.

Vorteilhafte Weiterbildungen der Erfindung, insbesondere eine Vorrichtung zur Durchführung des vorstehend beschriebenen Verfahrens sind den weiteren Unteransprüchen zu entnehmen.

Ein Ausführungsbeispiel der Erfindung wird im Folgenden anhand eines schematischen Blockschaltbildes näher erläutert.

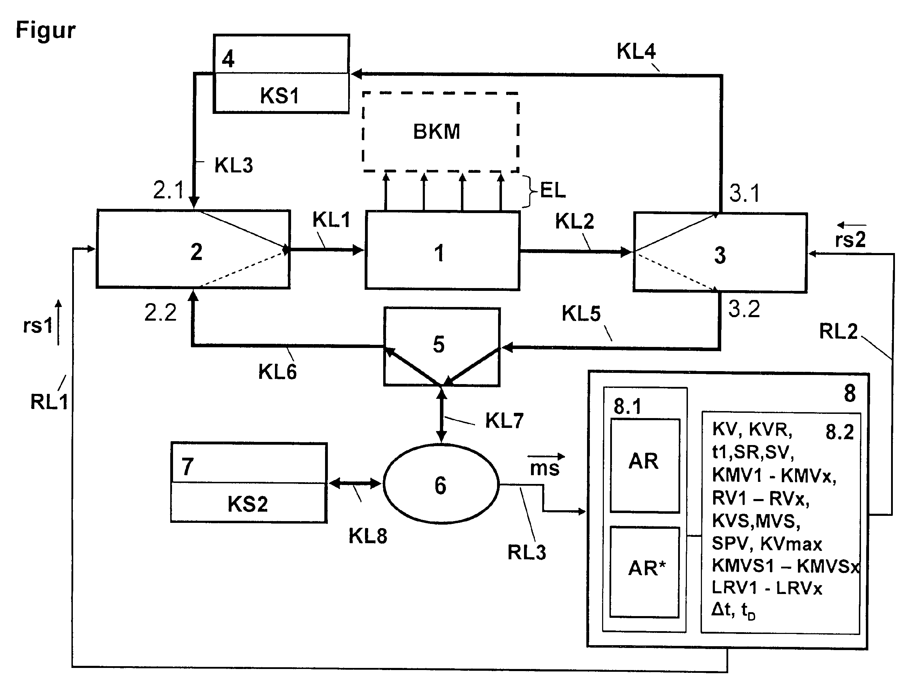

Die Figur zeigt beispielhaft in einem schematischen Blockschaltbild ein Einspritzsystem 1, dass über mehrere Einspritzleitungen EL beispielhaft an eine Brennkraftmaschine BKM angeschlossen, in die eine Kraftstoffsorte KS1, KS2 bzw. ein Kraftstoffgemisch eingespritzt wird. Das Einspritzsystem 1 ist über eine erste Kraftstoffleitung KL1 mit einem Vorlaufventil 2 und über eine zweite Kraftstoffleitung KL2 mit einem Rücklaufventil 3 verbunden. Beispielhaft ist das Vor- und Rücklaufventil 2,3 als 3/2-WegeVentile ausgestaltet, welche vorzugsweise als elektrisch betätigbare Magnetventile realisiert sein können.

Das Vorlaufventil 2 ist über eine dritte Kraftstoffleitung KL3 an einen ersten Kraftstofftank 4 angeschlossen, der mit einem ersten Kraftstoff KS1 gefüllt ist. Im vorliegenden Ausführungsbeispiel ist der erste Kraftstofftank 4 mit Dieselkraftstoff als ersten Kraftstoff KS1 gefüllt. Der Dieselkraftstoffkreis wird durch die Verbindung des Rücklaufventils 3 über eine vierte Kraftstoffleitung KL4 mit dem ersten Kraftstofftank 4 geschlossen.

Die vom Vorlaufventil 2 über die erste Kraftstoffleitung KL1 zum Einspritzsystem 1 führende Leitung wird in der Literatur häufig als "Einspritzpumpen-Vorlauf" und die vom Einspritzsystem 1 über die zweite Kraftstoffleitung KL2 zum Rücklaufventil 3 führende Leitung als "Einspritzpumpen-Rücklauf" bezeichnet.

Das Rücklaufventil 3 ist über eine fünfte Kraftstoffleitung KL5 mit einer T-Stück-Einheit 5 verbunden, welche über eine sechste Kraftstoffleitung KL6 mit dem Vorlaufventil 2 und über eine siebte Kraftstoffleitung KL7 mit einer Volumenstrommesseinrichtung 6, vorzugsweise einer elektronischen in Turbinenradbauweise realisierten Volumenstrommesseinrichtung, verbunden ist. Die Volumenstrommesseinrichtung 6 ist über eine achte Kraftstoffleitung KL8 an einen zweiten Kraftstofftank 7 angeschlossen. Der zweite Kraftstofftank 7 ist mit einer zweiten Kraftstoffsorte KS2, vorzugsweise Pflanzenöl gefüllt. Alternativ können anstelle der Volumenstrommesseinrichtung 6 eine einfache Füllstandseinheit oder zumindest eine Dosierpumpe - nicht in der Figur dargestellt - vorgesehen werden, anhand der vorgegebene Füllstände und somit Flüssigkeitsvolumina bestimmt werden können.

Ferner ist eine Regeleinheit 8 vorgesehen, die über eine erste Regelleitung RL1 mit dem Vorlaufventil 2, über eine zweite Regelleitung RL2 mit dem Rücklaufventil 3 und über eine dritte Regelleitung RL3 mit der Volumenstrommesseinrichtung 6 verbunden ist. Die Regeleinheit 8 weist eine Mikroprozessoreinheit 8.1 und eine Speichereinheit 8.2 auf. In der Mikroprozessoreinheit 8.1 ist eine Auswerteroutine AR vorgesehen, über die die als elektronische Magnetventile realisierten Vor- und Rücklaufventile 2, 3 geschaltet werden bzw. Betriebsparameter mit Hilfe der Volumenstrommesseinrichtung 6 gemessen und in der Speichereinheit 8.2 abgespeichert werden können.

Im Folgenden werden anhand des in der Figur dargestellten schematischen Blockschaltbildes die unterschiedlichen Betriebsarten der Brennkraftmaschine BKM mit Dieselkraftstoff als erste Kraftstoffsorte KS1 und Pflanzenöl als zweite Kraftstoffsorte KS2 näher erläutert.

Zum Umschalten der Zuführung der ersten und/oder zweiten Kraftstoffsorte KS1, KS2 in das Einspritzsystem 1 weisen das Vorlaufventil 2 und das Rücklaufventil 3 jeweils eine erste und zweite Schaltstellung 2.1, 2.2, 3.1, 3.2 auf. In der ersten Schaltstellung 2.1 des Vorlaufventils 2 ist der erste Kraftstofftank 4 über die dritte und erste Kraftstoffleitung KL3, KL1 mit dem Einspritzsystem 1 zur Zuführung des ersten Kraftstoffes, beispielsweise Diesel verbunden.

In der zweiten Schaltstellung 2.2 des Vorlaufventils 2 wird die in der Figur anhand einer strichliert gezeichneten Linie angedeutete Schaltstellung zur Verbindung des zweiten Kraftstofftanks 7 über die achte Kraftstoffleitung KL8, die Volumenstrommesseinrichtung 6, die siebte Kraftstoffleitung KL7, die T-Stück-Einheit 5 und die sechste und erste Kraftstoffleitung KL6, KL1 mit dem Einspritzsystem 1 hergestellt. Das Rücklaufventil 3 ist in der ersten Schaltstellung 3.1 über die zweite Kraftstoffleitung KL2 mit dem Ausgang des Einspritzsystems 1 und über die vierte Kraftstoffleitung KL4 mit einem Eingang des ersten Kraftstofftanks 4 verbunden. In der zweiten Schaltstellung 3.2 des Rücklaufventils 3 (in der Figur durch eine strichliert gezeichnete Linie angedeutet) ist das Einspritzsystem 1 über das Rücklaufventil 3, die fünfte Kraftstoffleitung KL5 mit der T-Stück-Einheit 5 verbunden.

Im Dieselbetrieb weisen das Vorlaufventil 2 und das Rücklaufventil 3 jeweils die erste Schaltstellung 2.1, 3.1 auf. Somit ist der erste Kraftstofftank 4 über die dritte Kraftstoffleitung KL3 mit dem Vorlaufventil 2 verbunden. Das Vorlaufventil 2 ist über die erste Kraftstoffleitung KL1 mit dem Einspritzsystem 1 und dieses über die zweite Kraftstoffleitung KL2 mit dem Rücklaufventil 3 verbunden. Das Rücklaufventil 3 schließt den Dieselkreis über die vierte Kraftstoffleitung KL4, der wiederum mit dem ersten Kraftstofftank 4 verbunden ist.

Die dargestellte Beschaltung ("durchgezogene Linien") der Vor- und Rücklaufventile 2, 3 entspricht im Hinblick auf die prinzipielle Funktionsweise dem serienmäßigen Betrieb eines nicht modifizierten Einspritzsystems innerhalb einer herkömmlichen direkt einspritzenden Dieselmaschine.

Im Pflanzenölbetrieb wird von der Zuführung des Dieselkraftstoffes KS1 auf die Zuführung von Pflanzenöl KS2 gewechselt. Hierzu wird gesteuert über die in der Regeleinheit 8 vorgesehene Auswerteroutine AR das Vorlaufventil 2 und das Rücklaufventil 3 jeweils in die zweite Schaltstellung 2.2, 3.2 geschaltet. Hierdurch ist über die T-Stück-Einheit 5 und über die Volumenstrommesseinrichtung 6 der Pflanzenölkreislauf hergestellt ("kurzgeschlossener Rücklauf").

Beim dargestellten Ausführungsbeispiel sind der Pflanzenöltank 7 und die Volumenmesseinrichtung 6 nur über die achte Kraftstoffleitung KL8 und die Volumenmesseinrichtung 6 mit der T-Stück-Einheit 5 über die siebte Kraftstoffleitung KL7 verbunden (=Einstrangbetrieb). Diese siebte und achte Kraftstoffleitung KL7, KL8 sind hierbei als bidirektionale Kraftstoffleitung KL7, KL8 ausgestaltet und dienen somit als Vor- und Rücklauf für das Pflanzenöl KS2 von bzw. in den Pflanzenöltank 7.

Die beschriebene Schaltposition entspricht den gestrichelt dargestellten Linien des Vor- und Rücklaufventils 2, 3. Im Pflanzenölbetrieb wird ausschließlich das in der Brennkraftmaschine BKM verbrauchte Kraftstoffvolumen an Pflanzenöl KS2 aus dem Pflanzenöltank 7 nachgesaugt und wird über die achte Kraftstoffleitung KL8, die Volumenstrommesseinrichtung 6, die T-Stück-Einheit 5, die sechste Kraftstoffleitung KL6, das Vorlaufventil 2 und die erste Kraftstoffleitung dem Einspritzsystem 1 zugeführt.

Über die Volumenstrommesseinrichtung 6 wird das aus dem zweiten Kraftstofftank 7 geförderte Kraftstoffvolumen KV gemessen und über die dritte Regelleitung RL3 an die elektronische Regeleinheit 8 in Form von Messsignalen ms übertragen. Über die in der Regeleinheit 8 vorgesehene Mikroprozessoreinheit 8.1 werden die empfangenen Messsignale ms ausgewertet und gegebenenfalls in der Speichereinheit 8.2 gespeichert.

Um das im Einspritzsystem 1 befindliche Pflanzenöl KS2 ganz oder zumindest anteilig durch Dieselkraftstoff KS1 ersetzen zu können ("Spülvorgang") wird das über die erste Regelleitung RL1 mit der Regeleinheit 8 verbundene Vorlaufventil 2 in die erste Schaltstellung 2.1 geschaltet. Das Vorlaufventil 2 verbindet nun den Dieseltank 4 über die dritte und erste Kraftstoffleitung KL3, KL1 mit dem Einspritzsystem (1) und führt dem Einspritzsystem 1 Dieselkraftstoff KS1 zu. Das Rücklaufventil 3 wird beim Umschalten vom Pflanzenölbetrieb auf den Spülbetrieb/Mischbetrieb in der zweiten Schaltposition 3.2 gehalten. Hierdurch wird das durch das Einspritzsystem 1 geförderte Kraftstoffvolumen KVR über die T-Stückeinheit 5 sowie die Volumenmesseinrichtung 6 dem Pflanzenöltank 7 zugeführt, da es über die T-Stückeinheit 5 und die sechste Kraftstoffleitung KL6 und den daran angeschlossenen versperrten Eingang des Vorlaufventils 2 nicht ablaufen kann.

Über die Volumenstrommesseinrichtung 6 wird das durch das Einspritzsystem 1 geförderte Kraftstoffvolumen KVR gemessenen und anhand von Messsignalen ms an die Regeleinheit 8 übertragen. Vorteilhafterweise kann in einer bevorzugten Ausführungsform das im Einspritzsystem 1 verbrauchte bzw. verbrannte Kraftstoffvolumen/Kraftstoffvolumengemisch bei der Ermittlung des durch das Einspritzsystem 1 geförderten Kraftstoffvolumens KVR berücksichtigt werden.

Über die Volumenstrommesseinrichtung 6 wird die Strömungsrichtung SR und das Strömungsvolumen SV ab einem festgelegten Startzeitpunkt t1, beispielsweise dem Zeitpunkt an dem das Vorlaufventil 2 von der zweiten in die erste Schaltposition 2.2, 2.1 umgeschaltet wurde, gemessen und über die dritte Regelleitung RL3 in Form von Messsignalen ms an die Regeleinheit 8 übertragen. In der Mikroprozessoreinheit 8.1 der Regeleinheit 8 werden mittels der Auswerteroutine AR die empfangenen Messsignale ms der gemessenen Strömungsrichtung SR und des gemessenen Strömungsvolumens SV zur Ermittlung des durch das Einspritzsystem 1 geförderten Kraftstoffvolumens KVR ausgewertet.

Zur Verifikation des Vorliegens eines vorgegebenen Kraftstoffmischungsverhältnisses KMV1 bis KMVx sind in der Speichereinheit 8.2 vorgegebene Referenzvolumina RV1 bis RVx abgespeichert. Einem derartigen Referenzvolumen RV1 bis RVx ist jeweils ein im Einspritzsystem 1 vorliegendes Kraftstoffmischungsverhältnis KMV1 bis KMVx zugeordnet. Somit kann anhand des von einem Startzeitpunkt t1 durch das Einspritzsystem 1 geförderten Kraftstoffvolumens KVR das Vorliegen eines vorgegebenen Kraftstoffmischungsverhältnisses KMV1 bis KMVx beim Betrieb der Brennkraftmaschine BKM verifiziert werden.

Darüber hinaus ist mittels der in der Volumenstrommesseinrichtung 6 gemessenen Strömungsrichtung SR des Pflanzenöls KS2 vom Pflanzenöltank 7 zum oder vom Einspritzsystem 1 der Zuschnitt an Pflanzenöl KS2 quantifizierbar. Die Verifikation eines vorgegebenen Kraftstoffmischungsverhältnisses KMV1 bis KMVx im Einspritzsystem 1 beim Betrieb der Brennkraftmaschine BKM ist nahezu kontinuierlich mittels der in der Mikroprozessoreinheit 8.1 ausgeführten Auswerteroutine AR möglich, die hierzu beispielsweise eine Schleifenroutine aufweist.

Zur Erhöhung der Verifikationsgenauigkeit der Auswerteroutine AR werden in der Speichereinheit 8.2 ein Satz von Startwerten gespeichert, die anhand der physikalischen Abmessungen des Einspritzsystems bzw. der bekannten Betriebsparameter der Einspritzpumpe etc. abgeschätzt werden. Zu den Startwerten zählen beispielsweise das gesamte im Einspritzsystem 1 zu Beginn des Pflanzenölzuschnitts enthaltene Kraftstoffvolumen KVS sowie das Mischungsverhältnis MVS bei Beginn des Pflanzenölzuschnitts.

Beim Spülvorgang wird anhand eines in der Speichereinheit 8.2 gespeicherten, individuell festlegbaren Spülvolumens SPV das Vorliegen eines für den Spülvorgang ausreichendes Kraftstoffmischungsverhältnis verifiziert, dass das Ende des Spülvorganges vorgibt. Hierzu wird das von dem ersten Startzeitpunkt bzw. seit dem Spülbeginn t1 durch das Einspritzsystem 1 und über die Volumenstrommesseinrichtung 6 geförderte Kraftstoffvolumen KVR ermittelt und mit dem festgelegten Spülvolumen SPV mit Hilfe der Auswerteroutine AR verglichen. Bei zumindest einer Übereinstimmung der beiden Volumina KVR = SPV wird der Spülvorgang dadurch beendet, dass das Rücklaufventil 3 wieder in die erste Schaltstellung 3.1 geschaltet und somit über die vierte Kraftstoffleitung KL4 mit dem Dieseltank 4 verbunden wird. Der Spülvorgang ist damit beendet.

Darüber hinaus ist die Einstellung eines vorgegebenen Kraftstoffmischungsverhältnisses KMV1 bis KMVx während des Betriebes der Brennkraftstoffmaschine BKM möglich, um hierdurch die Viskosität des Kraftstoffgemisches und ebenso hierdurch die Kraftstoffverbrennung an erschwerte Betriebsbedingungen anpassen zu können. Beispielsweise kann ein Zyklus mit abwechselndem Pflanzenöl- und Dieselbetrieb mehrfach wiederholt werden.

Hierzu wird ausgehend von einem bekannten Kraftstoffmischungsverhältnis MVS, beispielsweise mit einem hohen Pflanzenölanteil, zunächst ein Spülvorgang - wie zuvor beschrieben - eingeleitet. Hierdurch wird dem Einspritzsystem 1 Dieselkraftstoff KS1 zugeführt. Die Menge des zugeführten Dieselkraftstoff KS1 kann hierbei über eine separat im Zuführungstrang (dritte und erste Kraftstoffleitung KL3, KL1) vorgesehene weitere Volumenmessvorrichtung (in der Figur nicht dargestellt) realisiert sein oder beispielsweise das zugeführte Dieselkraftstoffvolumen KV anhand des über die Volumenstrommesseinrichtung 6 abfließenden Kraftstoffvolumens KVR ermittelt werden. Das ermittelte Kraftstoffvolumen KVR wird analog zum Spülvorgang mit einem ein vorgegebenes Kraftstoffmischungsverhältnis KMV1 bis KMVx repräsentierendem Referenzvolumen RV1 bis RVx verglichen und anhand des Vergleichsergebnisses das Vorliegen eines vorgegebenen Kraftstoffmischungsverhältnis KMV1 verifiziert.

Ist das vorgegebene Kraftstoffmischungsverhältnis KMV1 erreicht wird wiederum auf reinen Pflanzenölbetrieb umgeschaltet, d.h. das Vorlaufventil 2 gesteuert über die Regeleinheit 8 in die zweite Schaltstellung 2.2 geschaltet. Nach dem Umschalten des Vorlaufventils 2 wird über die Volumenmesseinrichtung 6 anhand der Strömungsrichtung SR und des Strömungsvolumens SV ein zum Erreichen des vorgegebenen Kraftstoffmischungsverhältnis KMV1 erforderliches Pflanzenölvolumen dem Einspritzsystem 1 zugeführt, wobei das durch die Brennkraftmaschine BKM verbrauchte Kraftstoffvolumen KV bei der Ermittlung berücksichtigt wird.

Hierbei wird über die Auswerteroutine AR nahezu laufend anhand des aktuell geförderten Kraftstoffvolumens KVR das Vorliegen des vorgegebenen Kraftstoffmischungsverhältnis KMV1 überprüft. Nach Vorliegen des zum Erreichen des vorgegebenen Kraftstoffmischungsverhältnis KMV1 erforderlichen Pflanzenölvolumens beginnt der Mischzyklus erneut und es wird wiederum - analog zum Spülvorgang - Dieselkraftstoff KS2 in das Einspritzsystem 1 gefördert. Im Mittel kann somit anhand des beschriebenen Kraftstoffmischungsverfahrens ein frei wählbares aber exakt vorgebbares Kraftstoffmischungsverhältnis KMV1 eingestellt werden.

In einer bevorzugten Ausführungsform wird das in das Einspritzsystem 1 eingespeiste Dieselkraftstoffvolumen KV im Zyklus der Dieselbeimengung derart begrenzt, dass eine Rückspülung des Kraftstoffgemisches aus dem Einspritzsystem 1 in den Pflanzenöltank 7 vermieden werden kann. Hierdurch wird eine Verunreinigung des Pflanzenöls KS2 im Pflanzenöltank 7 unterbunden. Hierzu wird beispielsweise ein maximal zuführbares Dieselkraftstoffvolumen KVmax vorgegeben, dass maximal zu einer Zurückdrängung des in der achten Kraftstoffleitung KL8 und der siebten Kraftstoffleitung KL7 befindlichen Pflanzenölvolumens in den Pflanzenöltank 7 führt.

Anhand des beschriebenen Verfahrens lassen sich nahezu beliebige Kraftstoffmischungsverhältnisse KMV1 bis KMVx des ersten und zweiten Kraftstoffes KS1, KS2 im Einspritzsystem 1 einstellen, ohne dass Dieselkraftstoff KS1 in den Pflanzenöltank 7 gelangt.

Neben der Ermittlung eines beliebigen Kraftstoffmischungsverhältnisses KMV1 bis KMVx können in einer weiteren Ausgestaltung die ermittelten Messsignale ms mittels einer weiteren Auswertroutine AR* zur Ermittlung des Lastzustandes der Brennkraftmaschine BKM ausgewertet werden. Hierzu wird über die in der Mikroprozessoreinheit 8.1 ausgeführte weitere Auswerteroutine AR* anhand der Messsignale ms das geförderte Kraftstoffvolumen pro Zeit ("Kraftstoffvolumen") KVRT ermittelt. Ein derartige Ermittlung kann auf unterschiedlichste Arten erfolgen, beispielsweise kann über eine festgelegte Zeitdauer Δt das geförderte Kraftstoffvolumen KVR aufintegriert oder die für den Durchfluss eines vorgegebenen Lastreferenzvolumens LVR1 bis LVRx erforderliche Zeitdauer to gemessen werden.

Der Lastzustand der Brennkraftmaschine BKM ist durch den Kraftstoffverbrauch im Einspritzsystem 1 bzw. das durch das Einspritzsystem 1 geförderte Kraftstoffvolumen pro Zeit KVRT näherungsweise bestimmt, so dass zur Ermittlung des Lastzustandes der Brennkraftmaschine BKM in der Speichereinheit 8.2 vorgegebene Lastreferenzvolumens LVR1 bis LVRx für das geförderte Kraftstoffvolumen pro Zeit KVRT gespeichert sind. Den vorgegebenen Lastreferenzvolumina LVR1 bis LVRx sind darüber hinaus in der Speichereinheit 8.2 entsprechende von dem Lastzustand abhängige Soll-Kraftstoffmischungsverhältnisse KMVS1 bis KMVSx zugeordnet. Mittels des zuvor beschriebenen Verfahrens zur Einstellung eines beliebigen Kraftstoffmischungsverhältnisses KMV1 bis KMVx können die den Soll-Kraftstoffmischungsverhältnissen KMVS1 bis KMVSx entsprechenden Kraftstoffmischungsverhältnisse KMV1 bis KMVx eingestellt werden.

Hierbei wird analog zu dem zuvor beschriebenen Verfahren während des Pflanzenölbetriebes der Brennkraftstoffmaschine BKM anhand des gemessenen Kraftstoffvolumens pro Zeit KVRT laufend der Lastzustand der Brennkraftstoffmaschine BKM näherungsweise ermittelt und abhängig davon das Kraftstoffmischungsverhältnis KMV1 bis KMVx nachgeregelt.

Die Erfindung wurde voranstehend anhand eines Ausführungsbeispiels beschrieben. Es versteht sich, daß zahlreiche Änderungen möglich sind, ohne daß dadurch der der Erfindung zugrunde liegende Erfindungsgedanke verlassen wird.

## Patentansprüche

1. Verfahren zur Verifikation zumindest eines vorgegebenen Kraftstoffmischungsverhältnisses (KMV1 bis KMVx) in einem Einspritzsystem (1) beim Betrieb einer Brennkraftmaschine (BKM) mit zumindest zwei separat bevorrateten Kraftstoffsorten (KS1, KS2), bei dem dem Einspritzsystem (1) zumindest eine erste Kraftstoffsorte (KS1) zugeführt wird,
**dadurch gekennzeichnet,**
- **dass** mit der Zuführung einer zweiten Kraftstoffsorte (KS2) oder mit dem Wechsel der Zuführung von der ersten Kraftstoffsorte (KS1) auf die zweite Kraftstoffsorte (KS2) das durch das Einspritzsystem (1) geförderte Kraftstoffvolumen (KVR) ermittelt wird und
- **dass** abhängig von dem ermittelten Kraftstoffvolumen (KVR) das Vorliegen eines vorgegeben Kraftstoffmischungs-verhältnisses (KMV1 bis KMVx) verifiziert wird.

2. Verfahren nach Anspruch 1,
**dadurch gekennzeichnet,**
**dass** zur Verifikation eines vorgegeben Kraftstoffmischungsverhältnisses (KMV1 bis KMVx) das ermittelte Kraftstoffvolumen (KVR) mit einem ein vorgegebenes Kraftsstoffmischungsverhältnis (KMV1 bis KMVx) repräsentierendem Referenzvolumen (RV1 bis RVx) verglichen wird.

3. Verfahren nach Anspruch 1 oder 2,
**dadurch gekennzeichnet,**
**dass** das dem Einspritzsystem (1) zugeführte Kraftstoffvolumen (KV) des zweiten Kraftstoffs (KS2) ermittelt wird, und/oder
**dass** das aus dem Einspritzsystem (1) geförderte Kraftstoffvolumen (KVR) ermittelt wird.

4. Verfahren nach einem der Ansprüche 1 bis 3,
**dadurch gekennzeichnet,**
**dass** das dem Einspritzsystem (1) zugeführte Kraftstoffvolumen des zweiten Kraftstoffs (KS2) abzüglich des im Einspritzsystem (1) verbrauchten Kraftstoffvolumens (KVV) ermittelt wird.

5. Verfahren nach einem der Ansprüche 1 bis 4,
**dadurch gekennzeichnet,**
**dass** das im Einspritzsystem (1) vorhandene Gesamtkraftstoffvolumen (KVS) vor dem erstmaligen Zuführen der zweiten Kraftstoffsorte (KS2) oder dem erstmaligen Wechsel von der ersten auf die zweite Kraftstoffsorte (KS1, KS2) geschätzt wird.

6. Verfahren nach Anspruch 5,
**dadurch gekennzeichnet,**
**dass** das Kraftstoffmischungsverhältnis (MVS) des im Einspritzsystem (1) vorhandenen Gesamtkraftstoffvolumens (KVS) vor dem erstmaligen Zuführen der zweiten Kraftstoffsorte (KS2) oder dem erstmaligen Wechsel von der ersten auf die zweite Kraftstoffsorte (KS1, KS2) geschätzt wird.

7. Verfahren nach einem der Ansprüche 1 bis 6,
**dadurch gekennzeichnet,**
**dass** die Ermittlung der Kraftstoffvolumina (KV, KVR) über eine Volumenstrommesseinheit (6) oder über eine Füllstandseinheit oder mittels zumindest einer Dosierpumpe durchgeführt wird.

8. Verfahren nach einem Anspruch 7,
**dadurch gekennzeichnet,**
**dass** die Strömungsrichtung (SR) und das Strömungsvolumen (SV) des über die Volumenstrommesseinheit (6) oder über die Füllstandseinheit oder über die zumindest eine Dosierpumpe geführten Kraftstoffes bzw. Kraftstoffgemisches (KS1, KS2) ermittelt wird.

9. Verfahren nach einem der Ansprüche 1 bis 8,
**dadurch gekennzeichnet,**
**dass** das geförderte Kraftstoffvolumen (KV, KVR) ab einem Startzeitpunkt (t1) ermittelt wird, wobei als Startzeitpunkt (t1) der Zeitpunkt des Zuführens der zweiten Kraftstoffsorte (KS2) oder der Wechsel von der ersten auf die zweite Kraftstoffsorte (KS1, KS2) oder vice versa verwendet wird.

10. Verfahren nach einem der Ansprüche 1 bis 9,
**dadurch gekennzeichnet,**
**dass** das durch das Einspritzsystem (1) geförderte Kraftstoffvolumen (KVR) mit einem vorgegebenen Spülvolumen (SPV) verglichen wird und bei einer Übereinstimmung mit dem vorgegebenen Spülvolumen (SPV) oder einem Überschreiten des vorgegebenen Spülvolumens (SPV) durch das ermittelte Kraftstoffvolumen (KVR) der Spülvorgang beendet wird.

11. Verfahren nach einem der Ansprüche 1 bis 10,
**dadurch gekennzeichnet,**
**dass** mittels einer an die Volumenstrommesseinrichtung (6) angeschlossenen Regeleinheit (8) und über diese gesteuerte Vorlauf- und Rücklaufventilen (2, 3) ein vorgegebenes Kraftstoffmischungsverhältnis (KMV1 bis KMVx) durch abwechselnde Zuführung des ersten und zweiten Kraftstoffes (KS1, KS2) in das Einspritzsystem (1) laufend verifiziert und aufrecht erhalten wird, und/oder
**dass** das jeweils im Spül- oder Mischbetrieb zugeführte Kraftstoffvolumen (KV) des ersten Kraftstoffes (KS1) unterhalb einem durch die Einspritzsystemparameter vorgegebenen maximalen Kraftstoffvolumen gehalten wird.

12. Vorrichtung zur Durchführung des Verfahrens nach einem der vorhergehenden Ansprüche, mit einer Brennkraftmaschine (BKM)und einem an diese angeschlossenen Einspritzsystem (1), wobei das Einspritzsystem (1) über Kraftstoffleitungen (KL1 bis KL8) mit einem ersten und zweiten Kraftstofftank (4,7) verbunden ist,
**dadurch gekennzeichnet,**
**dass** der Eingang des Einspritzsystem (1) über eine Vorlaufventileinheit (2) und der Ausgang des Einspritzsystems (1) über eine Rücklaufventileinheit (3) jeweils mit dem ersten Kraftstofftank (4) verbunden sind,
**dass** die Vorlaufventileinheit (2) und die Rücklaufventileinheit (3) über eine T-Stück-Einheit (5) miteinander verbunden sind, und
**dass** an die T-Stück-Einheit (5) eine Volumenmesseinrichtung (6) oder eine Füllstandseinheit angeschlossen ist, die mit dem zweiten Kraftstofftank (7) verbunden ist.

13. Vorrichtung nach Anspruch 12,
**dadurch gekennzeichnet,**
**dass** eine Regeleinheit (8) zum Umschalten der Vorlaufventileinheit (2) und der Rücklaufventileinheit (3) von einer ersten in eine zweite Schaltstellung (2.1, 2.2, 3.1, 3.2) und vice versa vorgesehen ist, und
**dass** die Regeleinheit (8) eine Mikroprozessoreinheit (8.1) und eine Speichereinheit (8.2) aufweist, und/oder
**dass** die Regeleinheit (8) über Regelleitungen (RL1 bis RL3) mit der Vorlaufventileinheit (2), der Rücklaufventileinheit (3) und der Volumenmesseinrichtung (6) verbunden ist.

14. Verfahren zur Verifikation zumindest eines vorgegebenen Kraftstoffmischungsverhältnisses (KMV1 bis KMVx) in einem Einspritzsystem (1) zur Bestimmung des Lastzustandes einer Brennkraftmaschine (BKM) mit zumindest zwei separat bevorrateten Kraftstoffsorten (KS1, KS2), bei dem dem Einspritzsystem (1) zumindest eine erste Kraftstoffsorte (KS1) zugeführt wird,
**dadurch gekennzeichnet,**
- **dass** mit der Zuführung einer zweiten Kraftstoffsorte (KS2) oder mit dem Wechsel der Zuführung von der ersten Kraftstoffsorte (KS1) auf die zweite Kraftstoffsorte (KS2) das durch das Einspritzsystem (1) geförderte Kraftstoffvolumen pro Zeit (KVRT) ermittelt wird und
- **dass** abhängig von dem ermittelten Kraftstoffvolumen pro Zeit (KVRT) das Vorliegen eines vorgegeben Kraftstoffmischungsverhältnisses (KMV1 bis KMVx) zur Bestimmung des Lastzustandes der Brennkraftstoffmaschine BKM verifiziert wird.

15. Verfahren nach Anspruch 14,
**dadurch gekennzeichnet,**
**dass** die für die Förderung eines vorgegebenen Lastreferenzvolumens (LVR1 bis LVRx) durch das Einspritzsystem (1) erforderliche Zeitdauer (t_{D}) gemessen wird und anhand der gemessenen Zeitdauer (t_{D}) der Lastzustand der Brennkraftstoffmaschine BKM näherungsweise bestimmt wird.
